# EUROPEAN PATENT SPECIFICATION

(11) **EP 1 757 540 B1**
(45) Date of publication and mention of the grant of the patent: **05.01.2011**
(21) Application number: 05748656.5
(22) Date of filing: 13.05.2005
(51) Int. Cl.: B65G 1/08

(54) **IMPROVED STRUCTURE FOR PUSH-BACK PALLET STORAGE SYSTEMS**
VERBESSERTE STRUKTUR FÜR PUSH-BACK-PALETTENLAGERSYSTEME
STRUCTURE PERFECTIONNEE POUR SYSTEMES DE STOCKAGE DE PALETTES A GRAVITE INVERSEE

(30) Priority: 13.05.2004 ES 200401147
(43) Date of publication of application: 28.02.2007
(73) Proprietor: Mecalux, S.A., E-08940 Cornella De Llobregat (ES)
(72) Inventor: CARRILLO RODRIGUEZ, José-Luis, 08940 Cornella De Llobregat (ES)
(74) Representative: Isern-Jara, Nuria
(86) International application number: PCT/ES2005/000263
(87) International publication number: WO 2005/110895

(56) References cited:
- EP-A1- 0 241 579
- EP-A1- 0 888 983
- WO-A1-2004/110904
- GB-A- 1 470 439
- US-A- 5 598 934

## Description

This Patent application refers to an "IMPROVED STRUCTURE FOR PUSH BACK PALLET STORAGE" according to the preamble of claim 1.

As is already known in the technique, in "Push Back" systems, pallets are stored on levels which are slightly inclined so that the last pallet stored is the first to be removed.

Pallets are handled using a lifting trolley which deposits them on a platform which moves longitudinally. In this way, each platform is pushed backwards by the following loaded pallet. Unloading the pallet is by sliding the platform forwards along the shelving when the previous pallet is taken out using gravity on the slightly inclined plane on which the aforementioned platforms are stored. Loading and unloading pallets is from a central passage along which the lifting trolley moves. This storage system allows a high degree of selectivity and a large amount of storage.

The platforms are slid along the structure in accordance with Patent P200202800 (publication number ES2226548A) using moving trolleys on longitudinal rails fixed to the structure of the storage system. Movement of these trolleys is by swivel rollers inside these trolleys. In the aforementioned patent, the advantageous configuration of these moving trolleys was described. This allows the assembly of the internal rollers. In particular, each trolley is in an open U shape, with rollers assembled on the lower part, one on either side on aligned axles. These axles are located on holders which stick out towards the inside of each arm in the U shape so that the rollers do not stick out from the overall width of the U shape. Moreover, the shape of the moving trolleys surrounds the outside of the longitudinal rails and grips them in order to ensure that the trolley does not leave its rails while the lifting trolley is being used. The patent provides a very effective storage system which reduces the amount of space of all the equipment thus allowing more free space.

US 5598934 discloses a structure for push back pallet storage corresponding to the features of the preamble of claim 1.

These improvements proposed here are designed to improve the structure of the "Push Back" pallet storage in order to prevent the unwanted forward movement of the moving trolleys. This objective is achieved as disclosed in the characterizing portion of claim 1. It has a mechanism which ensures that the equipment is locked when there is no load on the moving trolleys.

The structure of the invention includes, as already defined in the main patent, a set of transoms and crossbeams on different levels inside onto which the loaded pallets are placed. These pallets are supported by pairs of trolleys which move longitudinally with respect to the corresponding trolleys which are fixed to the structure.

The proposed improvements consist of each moving trolley having a swivel catch at one end. This swivel catch has an end which extends upwards and sticks out over the upper part of the trolley through an opening in the same. The swivel catch has an extension at its other end which extends downwards to be fixed into an opening in the corresponding rail. It also has a transverse axle inside the moving trolley which passes through the aforementioned swivel catch. The transverse axle passes through the catch at the point nearer to its first end than the second end.

In accordance with the catch's structure defined above, when there are no pallets on a pair of moving trolleys, the second end of the catch remains inserted in the opening on the fixed rail due to its own weight. This prevents the trolley from moving on the rail, thereby locking the equipment when there is no load.

When a pallet is supported by a pair of trolleys, the pallet is placed on the first end of the catch which extends out from the upper section of the trolley through the opening in it, removing the second end of the catch from the opening in the fixed rail and consequently freeing the equipment in order for the trolleys to be able to move.

Preferably, the catch in each trolley has an initial end in the trolley where the pallets are placed on the structure.

Due to the layout of the swivel catch mechanism, pairs of moving trolleys may only move when necessary and in a synchronised manner, two at a time. This is the best use of the loading and unloading process for the storage system always guaranteeing the correct positioning of the trolleys.

The features and advantages of the improvements which have been described for the "Push Back" pallet storage system in this invention will become clearer from the detailed description of a preferred set up of the same which shall be given below as a non limiting example. Reference shall be made to the attached drawings. The drawings show:
Figure 1 is a partial view of the moving trolley assembled on the corresponding fixed rail. This trolley is equipped with a swivel catch in the locked position.
Figure 2 is a front view of the moving trolley and the fixed rail in Figure 1 where the catch is in the locking position.
Figure 3 is a partial a view of the moving trolley assembled on the corresponding fixed rail showing the catch in the unlocked position.
Figure 4 is a front view of the moving trolley and the fixed rail in Figure 1 where the catch is in the unlocked position.

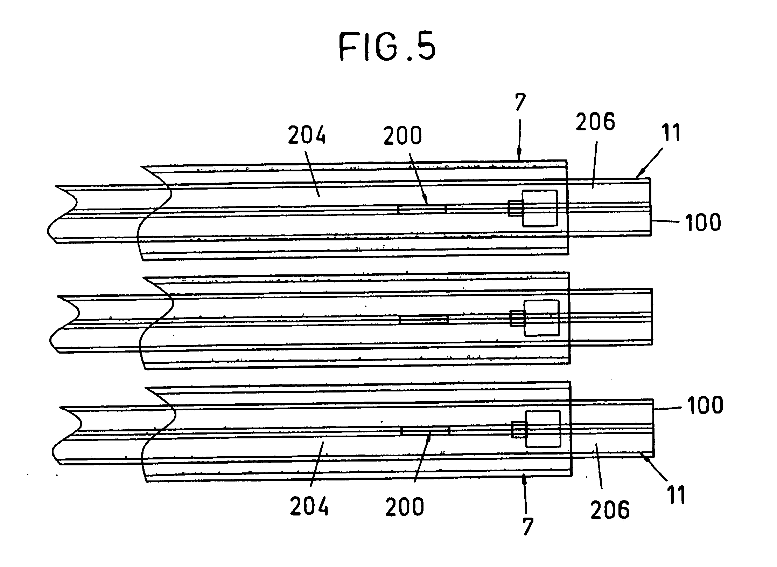

Figure 5 is a partial plan view showing a moving trolley assembled on the structure's corresponding fixed rail for each of the three pairs which form the set in the represented set up.
Figure 6 is a front view of one level of the invention's structure.

The list below shows the different reference numbers which have been used in the preferred set up of the device in this invention:
(3) vertical poles
(4, 5, 6) pallets
(7) moving trolleys
(11) longitudinal trolleys fixed to the structure
(12, 13) wings on the outline of the trolleys
(14, 15) holders on the trolleys
(16, 17) aligned transversal axles
(18, 19) washers
(20, 21) rollers
(22) lower section of the inside of the longitudinal rail
(100) initial end of the trolley
(101) initial transom
(102) intermediate transoms
(103) diagonal poles
(200) catches
(201) first end of catch
(202) second end of catch
(203) transversal axle of catch
(204) upper section of trolley
(205) opening in upper section of trolley
(206) fixed rail head
(207) opening in the fixed rail head

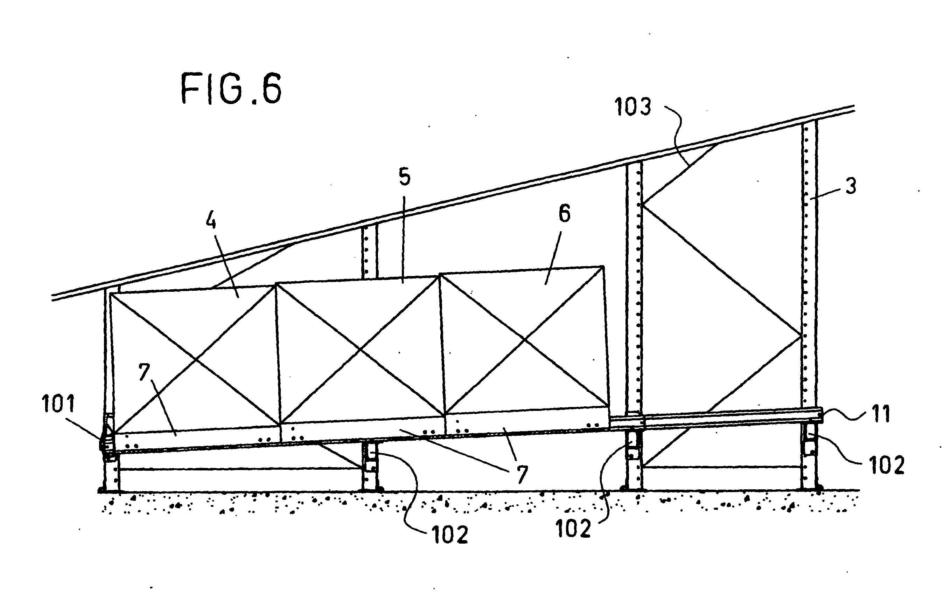

In the attached diagrams an example of the compact "Push Back" pallet system is shown. It includes a structure formed by a frame which includes vertical or puntales poles (3), an initial transom (101) and intermediate transoms (102) as shown in figure 6. The structure's frame is completed by diagonal poles (103).

Loaded pallets (4, 5, 6) are placed well inside supported on pairs of moving trolleys (7). The moving trolleys (7) may be moved in the direction of the loading and unloading along longitudinal rails (11) fixed to the structure. The longitudinal rails (11) are supported by their own weight on transoms (101, 102) on the structure and their ends are attached to it by screws or any other appropriate system.

As can be seen in the view in Figure 6, the rails (11) have a slight longitudinal slope (about 4%) to facilitate unloading operations with the fork lift.

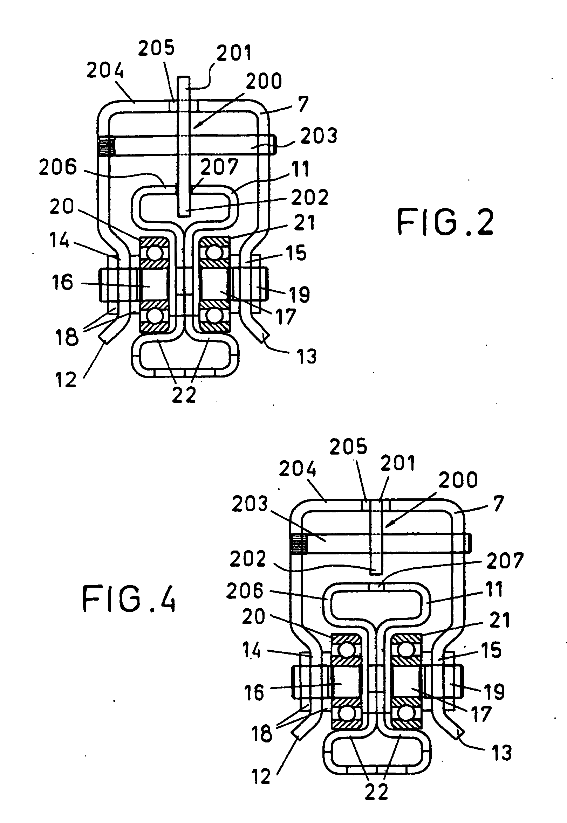

With particular reference to Figures 2 and 4, the moving trolleys (7) are formed by a shape which is mainly an inverted U. Each of the arms (12, 13) of the shape has a holder (14, 15) which extends out towards the lower section of the U shape. Each holder (14, 15) has a transversal axle (16, 17). Each axle (16, 17) supports, with the assistance of washers (18, 19) located in them, their respective rollers (20, 21) which may turn freely while the trolley (7) is moving. In order for this to happen, the aforementioned rollers (20, 21) are supported on the lower section (22) of the inside of the rail (11).

There may be as many rollers (20, 21) as necessary along each trolley (70). There are generally one on either side of the ends of each trolley(7). If more rollers (20, 21) are required depending on the load to be supported, then more may be attached so that they are perfectly guided on their route.

The rollers (20, 21) and the axles (16, 17) do not extend beyond the total width of the trolley (7) because of the aforementioned holders (14, 15), to reduce the distance between trolleys (7) to a minimum.
The outside of the trolleys (7) surround the outside of the longitudinal rail (11) on the structure so that it is perfectly guided with an accurate movement. This is achieved by bending the aforementioned shape until it is mainly in the form of an "I" as shown by Figures 2 and 4.

As seen in Figure 6, the structure of the "Push Back" system in this invention defines several internal roads for loads with various levels according to requirements and the height of the premises (only one level is shown in the aforementioned Figure 6). Each level in the structure may have one product as each level is independent and the fork lift does not have to be placed inside the roads.
The longitudinal rails (11) on the transoms (101, 102) in the structure are separated according to the width required for each pallet (4, 5, 6) so that they are supported in a stable manner. The length of each trolley (7) running along the corresponding rail (11) is equal to the depth of the pallet (4, 5, 6).

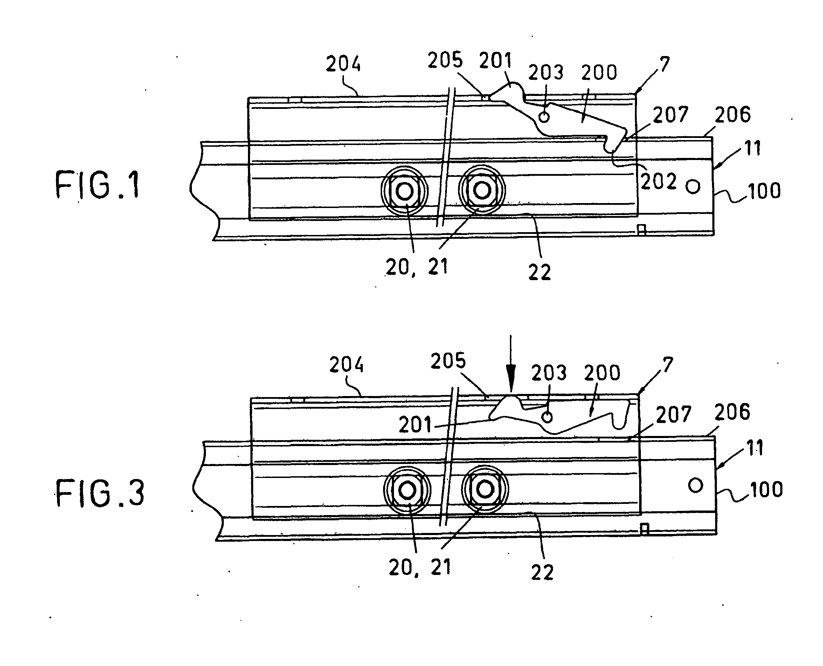

In accordance with the improvements proposed, each of the moving trolleys (7) on the structure have at their initial end (100), i.e. the loading and unloading end, a swivel catch (200). This swivel catch (200) is a flat metal piece which has its first end (201) extending upwards and a second end (202) extending downwards as shown in Figures 1 and 3 in the drawings attached to this report.

The swivel catch (200) turns on a transversal axle (203) inside the moving trolley (7) as shown in Figures 2 and 4.

On the upper section (204) of the moving trolley (7) where the loaded pallet (4, 5, 6) is located, there is an opening (205) out of which the first end (201) extends from the swivel catch (200).

On the head (206) of the fixed rail (11) there is an opening (207) to house the second end (202) of the swivel catch (200).

As can be seen in Figures 1 and 3, the transversal axle (203) passes through the catch (200) at a point nearer to the first end (2010 than the second end (202) on the catch (200). In this way, when the upper section (204) of a pair of moving trolleys (7) is not holding a pallet (4, 5, 6), it is in the locked position shown in Figures 1 and 2. This locked position means that the moving trolley (7) cannot move along the fixed rail (11) because of the second end (202) of the swivel catch remaining inserted in the opening of the head (207) of the fixed rail (11) due to the weight of this section of the catch (200).

When there is a pallet (4, 5, 6) on the upper section (204) of a pair of trolleys (7), the lower section of the pallet (4, 5, 6) is supported on the aforementioned first end (201) of the catch (200) which extends from it through the opening (205). When the pallet (4, 5, 6) is supported on the first end (201) of the catch (200) it turns on its axles (203) and the consequent freeing of the second end (202) of the opening (207) of the rail (11) means that the trolley (7) can now move freely along the rail (11).

Therefore, it starts from an unloaded locked position shown in Figure 1 where the operator loads the first pallet (6) on a pair of trolleys (7) located on a slightly inclined plane which is higher than the following trolley. The pallet (6) is supported only by a pair of trolleys (7) and is located on the aforementioned trolley (7) unlocking the equipment as shown in Figures 3 and 4 in the drawings. The operator performs the same action with the other pallets, i.e. uses the second pallet (5) to displace the first pallet (6) inside the structure as shown in Figure 6 of the drawings. The pallet (6) moves slightly because of the level of the trolleys (7). When the first pallet (6) has moved a distance which is equal to the space it occupies, which is then occupied by the second pallet (5), the latter descends until it is supported on the trolleys (7) at an immediately lower height. The third pallet (4) moves and is located in the same way as the second pallet (5) and, as the first pallet (6) and second pallet (5) have moved towards the inside of the structure, the aforementioned third pallet (4) descends and is supported on the pair of trolleys at a lower height (7). As previously stated, there may be a fourth pallet (not illustrated) supported on all of the rails (11).

To remove the three pallets shown (4, 5, 6) plus a fourth additional pallet (not shown) from the structure, the operator first removes the last pallet placed inside, leaving the three remaining pallets (4, 5, 6) in the road, which return to the loading and unloading area by moving along the rails (11) because of their longitudinal slope which makes them return to the aforementioned pallet loading and unloading area.

The moving trolleys (7) always have their brakes on because the transom (101) on the initial section of the road acts as a stopper. When the second pallet (4) is removed, the process is repeated by moving the other pallets down (5, 6) and so on. During loading, pallets are moved by pushing them upwards towards the inside of the road, while unloading is downwards towards the outside of the road using gravity.

Having sufficiently described the improvements of the structure for the "Push Back" pallet storage system in this invention using the attached drawings, it must be understood that any form of modification may be made to the details as deemed necessary, whenever the essential features of the invention summarised in the following claims remain unaltered.

## Claims

1. STRUCTURE FOR PUSH BACK PALLET STORAGE including a structure of transoms and crossbeams on several levels inside which pallets (4, 5, 6) may be placed supported on pairs of trolleys (7) moving longitudinally along fixed rails (11) on the structure said structure being **characterised by** the fact that each moving trolley (7) has a swivel catch (200) at its first end (201) extending upwards and which extends beyond the upper section (204) of the trolley (7) through an opening (205) in the trolley and a second end (202) extending downwards which may be housed in an opening (207) in the fixed rail (11). This has an axle (203) transversally located inside the moving trolley (7) which passes through the catch (200) at a point nearer to the first end (201) than the second end (202) on the catch (200). In this way, if a pair of moving trolleys (7) are not supporting pallets (4, 5, 6), the second end (202) of the catch (200) remains inserted in the aforementioned opening (207) on the fixed rail (11) due to the weight of the catch (200) preventing the trolley (7) from moving along the rail (11). The trolley (7) is released when it supports a pallet (4, 5, 6) on the first end (201) of the catch (200) which extends beyond the upper part (204) of the trolley (7) through the opening (205) in it.

2. STRUCTURE FOR PUSH BACK PALLET STORAGE according to claim 1, **characterised by** the fact that the catch (200) has an initial end (100) of each trolley (7) where the pallets are placed (4, 5, 6) on the structure.

## Patentansprüche

1. Lagersystem für Einschubregale, das einen Aufbau von Querträgern und Querbalken auf verschiedenen Ebenen umfasst, in denen Paletten (4, 5, 6) untergebracht werden können, die auf paarweise angeordneten, sich in Längsrichtung entlang standfester Schienen (11) auf der Struktur bewegenden Förderwagen (7) gelagert werden, wobei dieses System **dadurch gekennzeichnet ist, dass** jeder bewegte Förderwagen (7) eine drehbare Klinke (200) aufweist, die sich mit ihrem ersten Ende (201) nach oben erstreckt und über den oberen Bereich (204) des Förderwagens (7), durch eine Öffnung (205) im Förderwagen, hinausragt und ein zweites Ende (202) aufweist, das sich nach unten erstreckt und in einer Öffnung (207) in der standfesten Schiene (11) gelagert werden kann. Sie besitzt eine Achse (203), die quer innerhalb des bewegten Förderwagens (7) gelagert ist und die Klinke (200) an einem Punkt durchquert, der sich näher am ersten Ende (201) als am zweiten Ende (202) auf der Klinke (200) befindet. Wenn demnach ein Paar bewegter Förderwagen (7) keine Paletten (4, 5, 6) befördern, verbleibt das zweite Ende (202) der Klinke (200) aufgrund des Gewichtes der Klinke (200) in der erwähnten Öffnung (207) auf der standfesten Schiene (11) eingelagert und verhindert damit, dass sich der Förderwagen (7) entlang der Schiene (11) bewegt. Der Förderwagen (7) wird freigesetzt, wenn er eine Palette (4, 5, 6) am ersten Ende (201) der Klinke (200) aufnimmt, die über den oberen Bereich (204) des Förderwagens durch die Öffnung (205) in demselben hinausragt.

2. Lagersystem für Einschubregale gemäss dem Anspruch 1, **dadurch gekennzeichnet, dass** die Klinke (200) ein Eingangsende (100) an jedem Förderwagen (7) aufweist, an dem die Paletten (4, 5, 6) auf dem Aufbau angeordnet werden.

## Revendications

1. Structure pour l'emmagasinage de palettes du type « push back », qui comprend une structure de traverses et poutres sur plusieurs niveaux à l'intérieur de laquelle des palettes (4, 5, 6) peuvent être disposées, supportées sur des paires d'élévateurs (7) qui se déplacent en direction longitudinale le long de rails fixés (11) sur la structure, ladite structure étant **caractérisée en ce que** chaque élévateur (7) mobile possède un cliquet pivotant (200) qui s'étend avec sa première extrémité (201) au-delà de la section supérieure de l'élévateur (7) à travers une ouverture (205) dans l'élévateur et une deuxième extrémité (202) qui s'étend vers le bas et qui peut être insérée dans une ouverture (207) dans le rail fixé (11). Celui-ci dispose d'une axe (203) située transversalement à l'intérieur de l'élévateur (7) mobile, qui passe à travers du cliquet (200) à un point qui se trouve plus près de la première extrémité (201) que la deuxième extrémité (202) sur le cliquet (200). Ainsi, si une paire d'élévateurs mobiles (7) ne supportent pas des palettes (4, 5, 6), la deuxième extrémité (202) du cliquet (200) reste insérée dans l'ouverture (207) mentionnée plus haut sur le rail fixé (11), dû au poids du cliquet (200) qui empêche que l'élévateur (7) ne se déplace le long du rail (11). L'élévateur (7) est lâché quand il supporte une palette (4, 5, 6) sur la première extrémité (201) du cliquet (200) qui s'étend au-delà de la partie supérieure (204) de l'élévateur (7) à travers de l'ouverture (205) dans celui-ci.

2. Structure pour l'emmagasinage de palettes du type « push back » selon la revendication 1, **caractérisé en ce que** le cliquet (200) possède une extrémité initiale (100) de chaque élévateur (7) où les palettes sont placées (4, 5, 6) sur la structure.
